(19) Europäisches Patentamt
European Patent Office
Office européen des brevets

(11) Veröffentlichungsnummer : **0 069 286**
**B1**

(12) # EUROPÄISCHE PATENTSCHRIFT

(45) Veröffentlichungstag der Patentschrift : **18.09.85**

(51) Int. Cl.⁴ : **C 08 G 18/14**, C 08 G 18/32, C 07 C 87/58

(21) Anmeldenummer : **82105593.6**

(22) Anmeldetag : **25.06.82**

(54) **Verfahren zur Herstellung von gegebenenfalls zelligen Polyurethan-Polyharnstoff-Formkörpern und alkylsubstituierte Phenylendiamine hierzu.**

(30) Priorität : **04.07.81 DE 3126435**

(43) Veröffentlichungstag der Anmeldung : **12.01.83 Patentblatt 83/02**

(45) Bekanntmachung des Hinweises auf die Patenterteilung : **18.09.85 Patentblatt 85/38**

(84) Benannte Vertragsstaaten : **AT BE CH DE FR GB IT LI NL SE**

(56) Entgegenhaltungen :
**EP-A- 0 026 915**
**FR-A- 2 178 975**
**US-A- 4 218 543**
**Patent Abstracts of Japan Band 2, Nr. 67, 20. Mai 1978 Seite 632C78**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Nissen, Dietmar, Dr.**
**Ziegelhaeuser Landstrasse 31**
**D-6900 Heidelberg (DE)**
Erfinder : **Neumann, Peter, Dr.**
**Franz-Schubert-Strasse 1**
**D-6908 Wiesloch (DE)**
Erfinder : **Marx, Matthias, Dr.**
**Seebacher Strasse 49**
**D-6702 Bad Duerkheim (DE)**
Erfinder : **Eilingsfeld, Heinz, Dr.**
**Pierstrasse 9 A**
**D-6710 Frankenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 069 286 B1

**Beschreibung**

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u. a. und organischen Polyisocyanate sowie durch zusätzliche Mitverwendung von Kettenverlängerungsmitteln, wie Glykolen oder Diaminen, können nach dieser Methode sowohl elastische wie starre Polyurethanelastomere sowie alle dazwischen liegenden Modifikationen hergestellt werden.

Zur Herstellung der Polyurethanelastomeren werden nach DE-PS 831 604 (US 2 778 810) aus den hydroxylgruppenhaltigen Verbindungen und Polyisocyanaten zunächst NCO-Gruppen haltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 11 49 523 (US 3 105 062) werden den flüssigen NCO-Gruppen haltigen Präpolymeren kristalline aromatische diprimäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE-PS 12 40 654 (US 3 423 610) werden die NCO-Gruppen haltigen Präpolymeren bei Raumtemperatur oder mäßig erhöhten Temperaturen mit solchen flüssigen oder gelösten aromatischen Diaminen umgesetzt, die in ortho-Stellung zur ersten Aminogruppe mindestens einen linearen Alkylsubstituenten und zur zweiten Amino-gruppe zwei lineare Alkylsubstituenten mit 1 bis 3 C-Atomen aufweisen.

Ein Verfahren zur Herstellung von gegebenenfalls zellförmigen, elastischen Formkörpern mit einer geschlossenen Oberflächenschicht aus Polyurethan-Polyharnstoff-Elastomeren nach dem Prinzip der Reaktionsspritzgußtechnik wird in der DE-AS 26 22 951 (US 4 218 543) beschrieben. Die genannten Systeme bestehen im wesentlichen aus organischen Polyisocyanaten, Polyolen, aktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 1 200 bis 1 800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der ortho-Stellungen zu den Aminogruppen substituiert ist. Derartige Systeme besitzen Startzeiten bis herab zu weniger als einer Sekunde ; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-PS 12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus gesundheitsschädlichen Bedenken aufwendige und erschwerende Auflagen erfordert.

Eine verminderte Reaktivität besitzen gemäß EP-OS 26915 auch 3,3', 5,5'-tetraalkylsubstituierte 4,4'-Diaminodiphenylmethane, deren Alkylreste gleich oder verschieden sind und einen Methyl-, Ethyl-, Isopropyl-, sek.-Butyl- oder tertiär Butylrest bedeuten, wobei mindestens einer der Reste ein Isopropyl- oder sek.-Butylrest sein muß, sowie die entsprechenden Diamino-diphenylmethan-Isomeren. Die beschriebenen tetraalkylsubstituierten Diaminodiphenylmethane sind mit den Polyolen in den erfoderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Aufgabe der vorliegenden Erfindung war es, Polyurethansysteme zu entwickeln, die insbesondere auch nach der Methode der Reaktionsspritzgußtechnik, im folgenden kurz « RIM » (reaction injection moulding) genannt, verarbeitet werden können. Die Systeme sollten im Vergleich zu solchen gemäß EP-OS 26915 etwas reaktiver sein. Nicht erforderlich war hingegen, daß die Diamine in jedem Verhältnis mit den Polyolen mischbar sind, wobei sie jedoch unter Verarbeitungsbedingungen ausreichend löslich sein müssen. Die Systeme sollten ferner bei einem relativ hohen Gehalt an Diaminen eine ausreichende Fließfähigkeit aufweisen. Die hergestellten Formkörper sollten eine hohe Wärmeformbeständigkeit besitzen und keinen progressiven Abfall der Schubmodulkurven zwischen 100° und 200 °C zeigen.

Diese Aufgabe wurde gelöst durch ein Verfahren zur Herstellung von gegebenenfalls zelligen Polyurethan-Polyharnstoff-Formkörpern durch Umsetzung von organischen Polyisocyanaten, Polyolen und alkylsubstituierten Phenylendiaminen oder Mischungen aus alkylsubstituierten Phenylendiaminen und Kettenverlängerungsmitteln, sek.-aromatischen Diaminen und/oder 3,3'-5,5'-tetra-alkylsubstituierten 4,4'-Diaminodiphenylmethanen in Gegenwart von Katalysatoren sowie gegebenenfalls Treibmitteln, Hilfsmitteln und Zusatzstoffen, das dadurch gekennzeichnet ist, daß man als alkylsubstituierte Phenylendiamine Verbindungen der Formeln

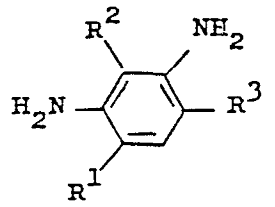 (I) 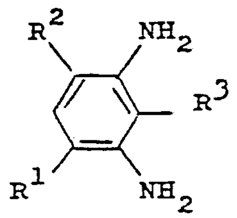 und/oder (II) 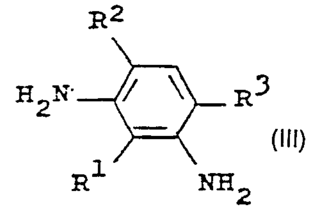 (III)

verwendet, in denen $R^1$ und $R^2$ gleich oder verschieden sind und einen Alkylrest mit 1 bis 4 C-Atomen, die linear oder verzweigt angeordnet sind, bedeuten und $R^3$ ein Alkylrest mit 4 bis 12 Kohlenstoffatomen oder ein fünfoder sechsgliedriger Cycloalkylrest ist.

Gegenstand der Erfindung sind ferner alkylsubstituierte Phenylendiamine der Formeln (I), (II) und/oder (III), in welchen $R^1$ und $R^2$ je eine Methylgruppe und $R^3$ einen tert. Butyl-, tert. Amyl-, Hexyl- oder Octylrest bedeuten.

Erfindungsgemäß verwendbar sind sowohl Einzelverbindungen, die den Formeln (I), (II) oder (III) entsprechen als auch Mischungen aus Verbindungen der Formeln (I), (II) oder/und (III) sowie Mischungen aus alkylsubstituierten Phenylendiaminen der Formel (I), (II) oder (III) mit Kettenverlängerungsmitteln, sek. aromatischen Diaminen und/oder 3,3', 5,5'-tetraalkylsubstituierten 4,4'-Diamino-diphenyl-methanen.

Die erfindungsgemäß verwendbaren Phenylendiamine sind bei Raumtemperatur in den Polyolen, insbesondere Polyetherolen und Polyesterolen, ausreichend gut löslich. Sie weisen im Vergleich zu 2,4- bzw. 2,6-Toluylendiamin eine verminderte und zu tetraalkylsubstituierten Diamino-diphenylmethanen eine erhöhte Reaktivität auf und ergeben daher Systeme mit beachtlicher Fließfähigkeit auch bei hohen Gehalten an alkylsubstituierten Phenylendiaminen. Schußzeiten bis zu 3 Sekunden auf Hochdruck-Maschinen sind möglich.

Ein weiterer Vorteil ist, daß bei Formkörpern zur Erzielung einer bestimmten Shore-Härte für die Polyurethan-Formulierung nur ein relativ geringer Polyisocyanatanteil benötigt wird. Demgemäß können in vorteilhafter Weise mit Mischungen aus Diphenylmethan-diisocyanaten und Polyphenyl-polymethylen-polyisocyanaten (Roh-MDI) und/oder Roh-MDI-Präpolymeren Formkörper mit guten mechanischen Eigenschaften hergestellt werden. Die höhere Funktionalität von Roh-MDI macht sich nur geringfügig bemerkbar ; ein Vorteil, der sich gravierend positiv auf die Wirtschaftlichkeit des erfindungsgemäßen Verfahrens auswirkt.

Die nach dem erfindungsgemäßen Verfahren mit Hilfe der RIM-Technik hergestellten Formkörper besitzen eine hohe Wärmeformbeständigkeit (für Materialien mit einer Shore D-Härte von 60 : 130° bis 140 °C nach ISO-R-75, Methode B) und zeigen keinen progressiven Abfall der Schubmodulkurve zwischen 100° und 200 °C.

Zu den für das erfindungsgemäße Verfahren verwendbaren Ausgangskomponenten ist folgendes auszuführen : Als Polyisocyanate kommen aliphatische, cycloaliphatische, araliphatische und vorzugsweise aromatische mehrwertige Isocyanate in Frage. Im einzelnen seien beispielhaft genannt : Alkylendiisocyanate mit 4 bis 12 Kohlenstoffatomen im Alkylenrest, wie 1,12-Dodecandiisocyanat, Tetramethylendiisocyanat-1,4 und vorzugsweise Hexamethylendiisocyanat-1,6 ; cycloaliphatische Diisocyanate, wie Cyclohexan-1,3- und- 1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate wie 4,4'-, 2,4' und 2,2'-Diisocyanatodiphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Diisocyanato-diphenylmethan und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht : Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS-71 02 524 beschrieben werden, Isocyanuratgruppen aufweisende Polyisocyanate wie sie z. B. in den DE-PS 10 22 789, 12 22 067 und 10 27 394 sowie den DE-OS 19 29 034 und 20 04 048 beschrieben werden, Urethangruppen aufweisende Polyisocyanate, wie sie z. B. in den ausgelegten Unterlagen des belgischen Patents 752 261 oder der US-PS 33 94 164 beschrieben werden, acylierte Harnstoffgruppen aufweisende Polyisocyanate, z. B. gemäß DE-PS 12 30 778, Biuretgruppen aufweisende Polyisocyanate, z. B. gemäß DE-PS 11 01 394 und GB-PS 889 050 ; durch Telomerisationsreaktionen hergestellte Polyisocyanate, z. B. entsprechend den ausgelegten Unterlagen des belgischen Patents 723 640, Estergruppen aufweisende Polyisocyanate, wie sie z. B. in der GB-PS 965 474 und 10 72 956, der US-PS 35 67 765 und der DE-PS 12 31 688 genannt werden.

Vorzugsweise kommen jedoch zur Anwendung : urethangruppenhaltige Polyisocyanate, beispielsweise mit niedermolekularen Diolen, Triolen oder Polypropylenglykolen modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethandiisocyanaten und Polyphenylpolymethylen-polyisocyanaten (Roh-MDI) und Gemische aus Toluylendiisocyanaten und Roh-MDI.

Als Polyole werden bei dem erfindungsgemäßen Verfahren vorzugsweise übliche lineare und/oder verzweigte, d.h. di- bis tetrafunktionelle, vorzugsweise di- und trifunktionelle Polyesterole und insbesondere Polyetherole mit Molekular-gewichten von 1 000 bis 8 000 und vorzugsweise 2 000 bis 7 000, verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiol-formale und Polycarbonate, insbesondere solche, hergestellt aus Diphenylcarbonat und Hexandiol-1,6 durch Umesterung.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind : 1,2- bzw. 1,3-Propylenglykol, Dipropylenglykol, 1,5-Pentamethylenglykol, 1,6-Hexamethylenglykol, 1,10-Decamethylenglykol, Glycerin, Trimethylolpropan und vorzugsweise Ethylenglykol, Diethylenglykol und 1,4-Butylenglykol. Als mehrwertige Alkohole können ferner Alkanolamine, wie Triethanolamin und Triisopropanolamin verwendet werden. Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole maximal 3,5, vorzugsweise 2 bis 3,0 ist.

Bewährt haben sich auch Polyesterole, die durch Polykondensation eines Dicarbonsäuregemisches, das bezogen auf das Gesamtgewicht der genannten Dicarbonsäuren enthält : 20 bis 35 Gew.-% vorzugsweise bis 33 Gew.-% Bernsteinsäure, 35 bis 50 Gew.-%, vorzugsweise 40 bis 45 Gew.-% Glutarsäure und 20 bis 32 Gew.-%, vorzugsweise 24 bis 28 Gew.-% Adipinsäure und Alkoholmischungen aus Ethylenglykol/1,4-Butandiol, Ethylenglykol/Diethylenglykol, Ethylenglykol/Trimethylolpropan, Diethylenglykol/Trimethylolpropan, Ethylenglykol/Triisopropanolamin und Diethylenglykol/Triisopropanolamin erhalten werden.

Die Polyesterole besitzen Molekulargewichte von 1 000 bis 3 000 und vorzugsweise 1 800 bis 2 500.

Vorzugsweise als Polyole verwendet werden jedoch Polyetherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht : Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'- 2,4'- und 2,2'-Diamino-diphenylmethan. Von den Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'', N''-Pentakis-(2-hydroxypropyl)-diethylentriamin, Phenyldiisopropanolamin und hohere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierbare Zucker und Zuckerderivate sind z. B. Saccarose, Alkylglykoside, wie Methylglykosid und Ethylenglukosid, ferner Glykolglykoside, wie Ethylenglykolglukosid, Propylenglykolglukosid, Glyzeringlukosid udn 1,2,6-Hexantriolglukosid.

In Betracht kommen ferner Polyole auf Basis von Polyphenolen und vorzugsweise deren Alkylenoxid-Addukte, in denen die Alkylenoxide 2 bis 4 Kohlenstoffatome besitzen. Anwendbare Polyphenole sind z. B. Bisphenol A, Bisphenol F, Kondensationsprodukte aus Phenol und Formaldehyd, besonders die Novolake, Kondensationsprodukte aus verschiedenen Phenolverbindungen und Acrolein, wobei die einfachsten Substanzen dieser Gruppe die 1,1,3-Tris-(hydroxyphenyl)-propane sind, Kondensationsprodukte verschiedener Phenolverbindungen mit Glyoxal, Glutaraldehyd und anderen Dialdehyden wobei die einfachsten Substanzen dieser Gruppe die 1,1,2,2-Tetrakis-(hydroxy-phenyl)-ethane sind.

Eine weitere verwendbare Gruppe von Polyolen sind die Alkylenoxid-Addukte, vorzugsweise die Ethylenoxid-, 1,2-Propylenoxid-, Butylenoxid- und deren Mischungen, -Addukte von Kondensationsprodukten aus aromatischem Amin, Phenol und Aldehyd. Die Kondensationsprodukte erhält man durch Kondensieren eines aromatischen Amins, z. B. Anilin oder Toluidin, eines Phenols z. B. Phenol oder Kresol und eines Aldehyds, vorzugsweise Formaldehyd bei erhöhten Temperaturen, z. B. im Bereich von 60 bis 180 °C. Das Kondensationsprodukt wird dann isoliert und unter Bildung der Polyole mit einem Alkylenoxid umgesetzt. Besonders erwähnenswert sind die Propylenoxid- und Propylen-Ethylenoxid-Addukte von Anilin/Phenol/Formaldehyd-Kondensationsprodukten.

Die Alkylenoxid-Addukte von Phosphor- und Polyphosphorsäuren sind eine weitere verwendbare Gruppe von Polyolen. Bevorzugte Alkylenoxide sind Ethylenoxid, 1,2-Propylenoxid, die Butylenoxide und Epichlorhydrin. Als Phosphorsäuren sind Phosphorsäure, phosphorige Säure, die Polyphosphorsäuren, wie Tripolyphosphorsäure, und die Polymetaphosphorsäuren günstig.

Die Polyetherole besitzen Molekulargewichte von 2 000 bis 8 000 und vorzugsweise 2 500 bis 7 000. Sie können ebenso wie die Polyesterole einzeln oder in Form von Mischungen verwendet werden. Ferner können sie vielfach mit den Polyesterolen, und hydroxylgruppenhaltigen Polyesteramiden, Polyacetalen und Polycarbonaten gemischt werden.

Wie bereits dargelegt wurde, weisen die erfindungsgemäß verwendbaren alkylsubstituierten Phenylendiamine Strukturen der Formeln

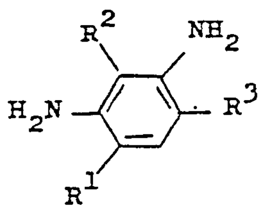 (I) 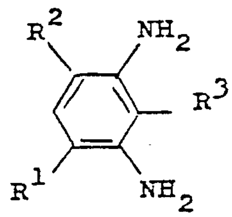 (II) und/oder 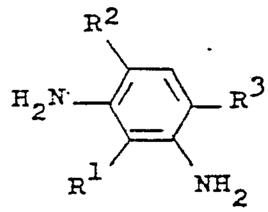 (III)

auf, in denen $R^1$ und $R^2$ gleich oder verschieden sind und einen Methyl-, Ethyl-, Propyl-, Isopropyl-, Butyl-, Isobutyl-, sek.-Butyl- oder tert.-Butylrest bedeuten und $R^3$ ein Alkylrest mit 4 bis 12, vorzugsweise 4 bis 8 Kohlenstoffatomen, oder ein fünf- oder sechsgliedriger Cycloalkylrest ist. Insbesondere bewährt haben sich verzweigte Alkylreste $R^3$ mit 4 bis 8 Kohlenstoffatomen. Als Reste $R^3$ seien beispielhaft genannt der n-Butyl-, 1-Methylpropyl-, 2-Methylpropyl-, tert.-Butyl-, n-Pentyl-, 1-Methylbutyl-, 1-Ethylpropyl-, 1,1-Dimethylpropyl-, n-Hexyl-, 1-Methylpentyl-, 1-Ethylbutyl-, 1,1-Dimethylbutyl-, 1-Methyl-1-ethylpropyl-, n-Heptyl-, 1-Methyl-hexyl-, 1-Ethylpentyl-, 1,1-Dimethylpentyl-, 1,1-Diethyl-propyl-, n-Octyl-, 1-Methylheptyl-, 1-Ethylhexyl-, 2-Ethylhexyl-, 1-Propylpentyl-, 1,1-Dimethylhexyl-, 1-Methyl-1-ethyl-pentyl-, 1,1-Diethylbutyl-, 1,1,3,3-Tetramethylbutyl-, n-Nonyl-, 1-Methyloctyl-, 1,1-Dimethylheptyl-, 1-Methyl-1-propylpentyl-, n-Decyl-, 1-Methylnonyl-, 1,1-Diethylhexyl-, 1,5-Dimethyl-1-ethylhexyl-, n-Undecyl-, 1-Methyldecyl-, 1-Ethylnonyl-, 1-Butylheptyl-, 1-Pentylhexyl, n-Dodecyl-, 1-Methylundecyl-, Cyclopentyl-, Cyclohexyl und Methylcyclohexylrest.

Als alkylsubstituierte Phenylendiamine kommen beispielsweise in Betracht : 2,4-Dimethyl-6-n-butyl-, 2,4-Dimethyl-6-(1-methylpropyl)-, 2,4-Dimethyl-6-(2-methylpropyl)-, 2,4-Dimethyl-6-tert.-butyl-, 2-Methyl-4-ethyl-6-n-butyl-, 2-Methyl-4-ethyl-6-(1-methylpropyl)-, 2-Methyl-4-ethyl-6-(2-methylpropyl)-, 2-Methyl-4-ethyl-6-tert.-butyl-, 2-Methyl-4-isopropyl-6-n-butyl-, 2-Methyl-4-isopropyl-6-(1-methylpropyl)-, 2-Methyl-4-isopropyl-6-(2-methylpropyl)-, 2-Methyl-4-isopropyl-6-tert.-butyl-, 2-Methyl-4,6-di-n-butyl-, 2-Methyl-4,6-bis-(1-methylpropyl)-, 2-Methyl-4,6-bis-(2-methylpropyl)-, 2-Methyl-4,6-di-tert.-butyl-, 2-Ethyl-4,6-di-n-butyl, 2-Ethyl-4,6-bis-(-1-methylpropyl)-, 2-Ethyl-4,6 -bis-(2-methylpropyl)-, 2-Ethyl-4,6-di-tert.-butyl-, 2-Isopropyl-4,6-di-n-butyl-, 2-Isopropyl-4,6-bis-(1-methylpropyl)-, 2-Isopropyl-4,6-bis-(2-methylpropyl)-, 2-Isopropyl-4,6-di-tert.-butyl-, 2,4-Diisopropyl-4-n-butyl-, 2,4-Diisopropyl-4-(1-methyl-propyl)-, 2,4-Diisopropyl-4-(2-methylpropyl)-, 2,4-Diisopropyl-4-tert.-butyl-, 2,4,6-Tri-n-butyl-, 2,4,6-Tris-(1-methylpropyl)-, 2,4,6-Tri-tert.-butyl-, 2,4,6-Tris-(1-methylpropyl)-, 2,4,6-Tri-tert.-butyl-, 2,4-Dimethyl-6-n-pentyl-, 2,4-Dimethyl-6-(1-methylbutyl)-, 2,4-Dimethyl-6-(1-ethylpropyl)-, 2,4-Dimethyl-6-(1,1-dimethylpropyl)-, 2-Methyl-4,6-di-n-pentyl-, 2-Methyl-4,6-bis-(1-methylbutyl)-, 2-Methyl-4,6-bis-(1-ethylpropyl)-, 2-Methyl-4,6-bis-(1,1-dimethylpropyl)-, 2-Ethyl-4,6-di-n-pentyl-, 2-Ethyl-4,6-bis-(1-ethylbutyl)-, 2-Ethyl-4,6-bis-(1-ethylpropyl)-, 2-Ethyl-4,6-bis-(1,1-dimethyl-propyl)-, 2-Propyl-4,6-bis-(1-methylbutyl)-, 2-Isopropyl-4,6-di-n-pentyl-, 2-Isopropyl-4,6-bis-(1-methylbutyl)-, 2-Isopropyl-4,6-bis-(2-methylpropyl)-, 2-Isopropyl-4,6-bis-(1,1-dimethylpropyl)-, 2-n-Butyl-4,6-bis-(1-methyl-butyl)-, 2,4-Dimethyl-6-n-hexyl, 2,4-Dimethyl-6-(1-methylpentyl)-, 2,4-Dimethyl-6-(1,1-dimethylbutyl)-, 2-Methyl-4-isopropyl-6-n-hexyl-, 2-Methyl-4-isopropyl-6-(1-methylpentyl)-, 2-Methyl-4,6-di-n-hexyl-, 2-Ethyl-4,6-di-n-hexyl-, 2-Ethyl-4,6-bis-(1-methylpentyl)-, 2-Isopropyl-4,6-di-n-hexyl-, 2-Isopropyl-4,6-bis-(1-methylpentyl)-, 2-n-Butyl-4,6-bis-(1-methylpentyl)-, 2,4-Dimethyl-6-n-heptyl-, 2,4-Dimethyl-6-(1-methylhexy)-, 2,4-Dimethyl-6-(1,1-dimethylpentyl)-, 2-Methyl-4-isopropyl-6-n-heptyl-, 2-Methyl-4-isopropyl-6-(1-methylhexyl)-, 2-Methyl-4,6-di-n-heptyl-, 2-Ethyl-4,6-di-n-heptyl-, 2-Ethyl-4,6-bis-(1-methylhexyl)-, 2-Isopropyl-4,6-di-n-heptyl-, 2-Isopropyl-4,6-bis-(1-methylhexyl)-, 2-n-Butyl-4,6-bis-(1-methylhexyl)-, 2,4-Dimethyl-6-n-octyl-, 2,4-Dimethyl-6-(1-methylheptyl)-, 2,4-Dimethyl-6-(1-ethylhexyl)-, 2,4-Dimethyl-6-(2-ethylhexyl)-, 2,4-Dimethyl-6-(1,1-dimethylhexyl)-, 2,4-Dimethyl-6-(1-methyl-1-ethylpentyl)-, 2,4-Dimethyl-6-(1,1,3,3-tetramethylbutyl)-, 2,4-Dimethyl-6-(1-propylpentyl)-, 2-Methyl-4-isopropyl-6-n-octyl-, 2-Methyl-4-isopropyl-6-(1-methylheptyl)-, 2-Methyl-4-isopropyl-6-(2-ethylhexyl)-, 2-Methyl-4-isopropyl-6-(1-methyl-1-ethylpentyl)-, 2-Methyl-4-isopropyl-6-(1,1,3,3-tetramethylbutyl)-, 2-Methyl-4-isopropyl-6-(1-propylpentyl)-, 2-Methyl-4,6-di-n-octyl-, 2-Methyl-4,6-bis-(1-methylheptyl)-, 2-Methyl-4,6-bis-(2-ethylhexyl)-, 2-Methyl-4,6-bis-(1,1,3,3-tetramethylbutyl)-, 2-Methyl-4,6-bis-(1-methyl-1-ethylpentyl)-, 2-Methyl-4,6-bis-(1-propylpentyl)-, 2-Ethyl-4,6-di-n-octyl-, 2-Ethyl-4,6-bis-(1-methylheptyl)-, 2-Ethyl-4,6-bis-(2-ethylhexyl)-, 2-Ethyl-4,6-bis-(1-methyl-1-ethylpentyl)-, 2-Ethyl-4,6-bis-(1,1,3,3-tetramethylbutyl)-, 2-Ethyl-4,6-bis-(1-propylpentyl)-, 2-Isopropyl-4,6-di-n-octyl-, 2-Isopropyl-4,6-bis-(1-methylheptyl)-, 2-Isopropyl-4,6-bis-(2-ethylhexyl)-, 2-Isopropyl-4,6-bis-(1-methyl-1-ethylpentyl)-, 2-Isopropyl-4,6-bis-(1,1,3,3-tetramethylbutyl)-, 2-Isopropyl-4,6-bis-(1-propylpentyl)-, 2-n-Butyl-4,6-di-n-octyl-, 2-n-Butyl-4,6-bis-(1-methylheptyl)-, 2-n-Butyl-4,6-bis-(2-ethylhexyl)-, 2-n-Butyl-4,6-bis-(1-methyl-1-ethylpentyl)-, 2-n-Butyl-4,6-bis-(1,1,3,3-tetramethylbutyl)-, 2-tert.-Butyl-4,6-bis-(1-propylpentyl)-, 2,4-Dimethyl-6-n-nonyl-, 2,4-Dimethyl-6-(1-methyloctyl)-, 2,4-Dimethyl-6-(1,1-dimethylheptyl)-, 2-Methyl-4-isopropyl-6-n-nonyl-, 2-Methyl-4-isopropyl-6-(1-methyloctyl)-, 2-Methyl-4-isopropyl-6-(1,1-dimethylheptyl)-, 2-Methyl-4,6-di-n-nonyl-, 2-Methyl-4,6-bis-(1-methyl-octyl)-, 2-Methyl-4,6-bis-(1,1-dimethylheptyl)-, 2-Ethyl-4,6-di-n-nonyl-, 2-Ethyl-4,6-bis-(1-methyloctyl)-, 2-Ethyl-4,6-bis-(1,1-dimethylheptyl)-, 2-Isopropyl-4,6-di-n-nonyl-, 2-Isopropyl-4,6-bis-(1-methyloctyl)-, 2-Isopropyl-4,6-bis-(1,1-dimethylheptyl)-, 2-tert.-Butyl-4,6-di-n-nonyl-, 2-tert.-Butyl-4,6-bis-(1-methyloctyl)-, 2-tert.-Butyl-4,6-bis-(1,1-dimethylheptyl)-, 2,4-Dimethyl-6-n-decyl-, 2,4-Dimethyl-6-(1-methylnonyl)-, 2,4-Dimethyl-6-(1,1-diethylhexyl)-, 2,4-Dimethyl-6-(1,5-dimethyl-1-ethylhexyl)-, 2-Methyl-4-isopropyl-6-n-decyl-, 2-Methyl-4-isopropyl-6-(1-methylnonyl)-, 2-Methyl-4-isopropyl-6-(1,1-diethylhexyl)-, 2-Methyl-4-isopropyl-6-(1,5-dimethyl-1-ethylhexyl)-, 2-Methyl-4,6-di-n-decyl-, 2-Methyl-4,6-bis-(1-methylnonyl)-, 2-Methyl-4,6-bis-(1-diethylhexyl)-, 2-Methyl-4,6-bis-(1,5-dimethyl-1-ethylhexyl)-, 2-Ethyl-4,6-di-n-decyl-, 2-Ethyl-4,6-bis-(1-methylnonyl)-, 2-Ethyl-4,6-bis-(1,1-diethylhexyl)-, 2-Ethyl-4,6-bis-(1,5-dimethyl-1-ethylhexyl)-, 2-Isopropyl-4,6-di-n-decyl-, 2-Isopropyl-4,6-bis-(1-methylnonyl)-, 2-Isopropyl-4,6-bis-(1,1-diethylhexyl)-, 2-Isopropyl-4,6-bis-(1,5-dimethyl-1-ethylhexyl)-, 2-tert.-Butyl-4,6-di-n-decyl-, 2-tert.-Butyl-4,6-bis-(1-methylnonyl)-, 2-tert.-Butyl-4,6-bis-(1,1-diethylhexyl)-, 2-tert.-Butyl-4,6-bis-(1,5-dimethyl-1-ethylhexyl)-, 2,4-Dimethyl-n-undecyl-, 2,4-Dimethyl-6-(1-methyldecyl)-, 2-Methyl-4-isopropyl-6-n-undecyl-, 2-Methyl-4-isopropyl-6-(1-methyldecyl)-, 2-Methyl-4,6-di-n-undecyl-, 2-Methyl-4,6-bis-(1-methyldecyl)-, 2-Ethyl-4,6-di-n-undecyl-, 2-Ethyl-4,6-bis-(1-methyldecyl)-, 2-Isopropyl-4,6-n-undecyl-, 2-Isopropyl-4,6-bis-(1-methyldecyl)-, 2-tert.-Butyl-4,6-di-n-undecyl-, 2-tert.-Butyl-4,6-bis-(1-methyldecyl)-, 2,4-Dimethyl-6-n-dodecyl-, 2,4-Dimethyl-6-(1-methylundecyl)-, 2-Methyl-4-isopropyl-6-n-dodecyl-, 2-Methyl-4-isopropyl-6-(1-methylundecyl)-, 2-Methyl-4-tert.-butyl-n-dodecyl-, 2-Methyl-4-tert.-butyl-n-dodecyl-, 2-Methyl-4-tert.-butyl-6-(1-methylundecyl)-, 2-Methyl-4,6-di-n-dodecyl-, 2-Methyl-4,6-bis-(1-methylundecyl)-, 2-Ethyl-4,6-di-n-dodecyl-, 2-Ethyl-4,6-bis-(1-methylundecyl)-, 2-Isopropyl-4,6-di-n-dodecyl-, 2-Isopropyl-4,6-bis-(1-methylundecyl)-, 2-tert.-Butyl-4,6-di-n-dodecyl-, 2-tert.-Butyl-4,6-bis-(1-methylundecyl)-, 2-Methyl-4-n-butyl-6-(1,1-dimethylpropyl)-, 2-Methyl-4-(1-methylpropyl)-6-n-pentyl-, 2-Methyl-4-tert.-Butyl-6-n-hexyl-, 2-Methyl-4-n-hexyl-6-(2-ethylhexyl)-, 2-Ethyl-4-tert. butyl-6-n-octyl-, 2-Ethyl-4-(1-methylpropyl)-6-(1-methylheptyl)-, 2-Isopropyl-4-(1,1-dimethylpropyl)-6-n-octyl-, 2-(1-methylpropyl)-4-n-hexyl-6-n-decyl-, 2,4-Dimethyl-6-cyclopentyl-, 2,4-Diethyl-6-cyclopentyl-, 2-Methyl-4-isopropyl-6-cyclopentyl-, 2-Methyl-4-tert.-butyl-6-cyclopentyl, 2,4-Dimethyl-6-cyclohexyl-, 2,4-Diethyl-6-cyclohexyl-, 2-Methyl-4-isopropyl-6-cyclohexyl-, 2-Methyl-4-tert. butyl-6-cyclohexyl-, 2,4-Dimethyl-6-(4-methylcyclohexyl)-phenylendiamin-1,3.

Vorzugsweise verwendet werden 2,4-Dimethyl-4-n-butyl-, 2,4-Dimethyl-4-(1-methylpropyl)-, 2,4-Dimethyl-4-tert.-butyl-, 2,4-Dimethyl-6-n-pentyl-, 2,4-Dimethyl-6-(1,1-dimethylpropyl)-, 2,4-Dimethyl-6-n-hexyl-, 2,4-Dimethyl-6-n-octyl-, 2,4-Dimethyl-6-(1-methylheptyl)-, 2,4-Dimethyl-6-(2-ethylhexyl)-, 2,4-Dimethyl-6-(1,1,3,3-tetramethylbutyl)-, 2-Methyl-4,6-di-n-butyl-, 2-Methyl-4,6-bis-(1-methylpropyl)-, 2-Methyl-4,6-di-tert.-butyl-, 2-Methyl-4-n-butyl-6-(1-methylpropyl)-, 2-Methyl-4-(1-methylpropyl)-6-tert.-butyl-, 2-Methyl-4,6-di-4-pentyl-, 2-Methyl-4,6-bis-(1,1-dimethylpropyl)-, 2-Methyl-4,6-di-n-hexyl-, 2-Methyl-4,6-di-n-octyl-, 2-Methyl-4,6-bis-(1-methylheptyl)-, 2-Methyl-4,6-bis-(2-ethylhexyl)-, 2-Ethyl-4,6-di-n-butyl-, 2-Ethyl-4,6-bis-(1-methylpropyl)-, 2-Methyl-4,6-di-tert.-butyl-, 2-Methyl-4-n-butyl-6-(1-methylpropyl)-, 2-Ethyl-4-(1-methylpropyl)-6-tert.-butyl-, 2-Ethyl-4,6-di-n-pentyl-, 2-Ethyl-4,6-bis-(1,1-dimethylpropyl)-, 2-Ethyl-4,6-di-n-hexyl-, 2-Ethyl-4,6-di-n-octyl-, 2-Ethyl-4,6-bis-(1-methylheptyl)-, 2-Ethyl-4,6-bis-(2-ethylhexyl)-, 2,4-Dimethyl-6-cyclohexyl-phenylendiamin-1,3. Unter die beispielhafte Aufzählung fallen auch die gemäß Formel I möglichen isomeren 1,3-Phenylendiamine.

Die Herstellung der erfindungsgemäß einzusetzenden aromatischen Phenylendiamine erfolgt in an sich bekannter Weise durch Nitrierung der entsprechenden Trialkylbenzole und anschließende Hydrierung oder Reduktion der erhaltenen Dinitroverbindungen. Die als Ausgangsstoffe verwendeten Trialkylbenzole lassen sich ausgehend von leicht zugänglichen Mono- oder 1,3-Dialkylbenzolen nach den beispielsweise in Rodd's Chemistry of Carbon Compounds, Band III/A S.102ff (1. Auflage) bzw. S. 156ff (2. Auflage), J. Mathieu und J. Weill-Raynal, Formation of C-C-Bonds, Band II, S. 280ff oder Methodicum Chimicum, Band 4, Grundgerüste, S. 171ff. beschriebenen Methoden herstellen. Von den dort genannten Verfahren ist aus wirtschaftlichen Gründen im allgemeinen die Alkylierung eines Mono- oder 1,3-Dialkylbenzols mit einem offenkettigen oder cyclischen Alkyl-halogenid, Alken oder Alkohol bevorzugt. An Stelle der reinen 1,3,5-Trialkylbenzole können für die weitere Umsetzung auch Gemische solcher Verbindungen verwendet werden, wie sie bei diesen Alkylierungsreaktionen anfallen.

Die Alkylbenzole werden in an sich bekannter Weise zu einem Gemisch isomerer Dinitroverbindungen nitriert. Geeignete Verfahren sind beispielsweise Houben-Weyl, Methoden der organischen Chemie, Band X/1, S. 32ff zu entnehmen. Die Reduktion der Nitrogruppen zu den entsprechenden aromatisch gebundenen Aminogruppen kann durch katalytische Hydrierung beispielsweise unter Verwendung von Raney-Nickel oder Palladium als Katalysator erfolgen. Sie kann selbstverständlich auch nach anderen, an sich bekannten Reduktionsmethoden unter Verwendung von beispielsweise Eisen, Zink, Zinn oder auch Hydrazin als Reduktionsmitel durchgeführt werden. Das beispielsweise nach Entfernen des Katalysators und des zur Reduktion angewandten Lösungsmittels anfallende Phenylendiamingemisch läßt sich ohne weiter Reinigung oder, wenn auf die Herstellung besonders gereinigter Verfahrensprodukte Wert gelegt wird, nach Kristallisation oder Destillation mit den gegebenenfalls modifizierten Polyisocyanaten umsetzen.

Die alkylsubstituierten Phenylendiamine der Formel (I), (II) oder (III) oder deren Gemische kommen beim erfindungsgemäßen Verfahren in Mengen von 5 bis 150 Gew.-Teile, vorzugsweise 8 bis 100 Gew.-Teile und insbesondere 10 bis 80 Gew.-Teile, bezogen auf 100 Gew.-Teile Polyol, zum Einsatz.

Als Katalysatoren werden insbesondere Verbindungen verwendet, die die Reaktion der Polyole und gegebenenfalls hydroxylgruppenhaltigen Kettenverlängerungsmittel mit den Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutyl-zinndiacetat, Dibutylzinn-dilaurat, Dibutylzinnmaleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexyl-morpholin, N,N,N',N'-Tetramethylethylendiamin, N,N,N',N'-Tetramethyl-butandiamin, Pentamethyl-diethylentriamin, Tetramethyl-diaminoethylether, Bis-(dimethylaminopropyl)-harnstoff : Dimethylpiperazin, 1,2-Dimethylimidazol, 1-Azo-bicyclo-(3,3,0)-octan und vorzugsweise 1,4-Diazabicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-N,N-dimethylaminopropyl)-s-hexahydrotriazin, Tetraalkylammoniumhydroxide, wie Tetramethylammoniumhydroxid, Alkalihydroxide wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Polyolgewicht.

Gegebenenfalls kann es auch zweckmäßig sein, insbesondere bei der Herstellung von zelligen Polyurethan-Polyharn-stoff-Formkörpern, die obengenannten alkylsubstituierten Phenylendiamine teilweise durch Kettenverlängerungsmittel, sek. aromatische Diamine und/oder 3,3',5,5'-tetra-alkylsubstituierte 4,4'-Diamino-diphenylmethane zu ersetzen. Die Kettenverlängerungsmittel besitzen vorteilhafterweise Molekulargewichte kleiner als 500, vorzugsweise von 30 bis 400 und weisen vorzugsweise zwei aktive Wasserstoffatome auf. In Betracht kommen beispielsweise aliphatische und/oder araliphatische Diole mit 2 bis 14, vorzugsweise 2 bis 6 Kohlenstoffatomen, wie Ethylenglykol, Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan und niedermolekulare hydroxylgruppenhaltige Polyalkylenoxide auf Basis Ethylen- und/oder Propylenoxid und den vorgenannten Startermolekülen.

Als sek. aromatische Diamine seien beispielhaft genannt : N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Disek-pentyl-, N,N'-Di-sek-hexyl-, N,N'-Di-sek.-decyl-, N,N'-Dicyclohexyl-p-bzw. m-phenylendiamin, N,N'-Dimethyl-, N,N'-Diethyl-, N,N'-Diisopropyl, N,N'-Di-sek-butyl-, N,N'-Dicyclohexyl-4,4'-diamino-diphenylmethan und N,N'-Di-sek-butyl-benzidin.

Geeignete 3,3',5,5'-tetra-alkylsubstituierte 4,4'-Di-aminodiphenylmethane sind beispielsweise 3,3',5,5'-Tetramethyl-, -Tetraethyl-, -Tetra-n-propyl-4,4'-diamino-diphenylmethan, 3,3'-Diisopropyl-5,5'-diethyl-, 3,5-Di-isopropyl-3',5'-dimethyl-, 3,3',5-Triisopropyl-5'-methyl- und vorzugsweise 3,3',5,5'-Tetraisopropyl-4,4'-diamino-diphenylmethan. Bewährt haben sich auch Mischungen aus den erfindungsgemäß verwendbaren alkylsubstituierten Phenylendiaminen und den obengenannten Kettenverlängerungsmitteln, sek. aromatischen Diaminen und/oder 3,3',5,5'-tetraalkylsubstituierten 4,4'-Diaminodiphenylmethanen.

Zu Treibmitteln, welche im erfindungsgemäßen Verfahren gegebenenfalls verwendet werden können, gehört Wasser, das mit Isocyanatgruppen unter Bildung von Kohlendioxid reagiert. Die Wassermenge, die zweckmäßigerweise verwendet wird, beträgt 0,1 bis 2 Gew.-%, bezogen auf das Polyolgewicht.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem

organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden, inerten Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zelligen Polyurethan-Polyharnstoff-Formkörper hängt ab von der Dichte, die man erreichen will sowie gegebenenfalls von der Mitverwendung von Wasser. Im allgemeinen liefern Mengen von 1 bis 15 Gew.-Teilen, bezogen auf 100 Gew.-Teile Polyol, zufriedenstellende Ergebnisse.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, Fungistatische und bakteriotatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin oder stearinsaures Diethanolamin, Salze von Sulfonsäuren, z. B. Alkali-oder Ammoniumsalze von Dodecylbenzol- oder Dinaphthyl- methan-disulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile Polyol, angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen.

Im einzelnen seien beispielhaft genannt ; anorganische Füllstoffe wie silikatische Mineralien, beispielsweise Schichtsilikate wie Antogorit, Serpentin, Hornblenden, Amphibole, Chrisotil, Talkum ; Metalloxide, wie Kaolin, Aluminiumoxide, Titanoxide und Eisenoxide, Metallsalze wie Kreide,Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichget sein können. Als organische Füllstoffe kommen beispielsweise in Betracht : Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Fillerpolyole, bei denen wäßrige Polymerdispersione in Polyoldispersionen übergeführt werden.

Die anorganischen und organischen Füllstoffe können einzeln oder als Gemische verwendet werden. Vorzugsweise Anwendung finden stabile Füllstoff-Polyol-Dispersionen, bei denen die Füllstoffe in Gegenwart von Polyolen in situ mit hohen örtlichen Energiedichten auf eine Teilchengröße kleiner als 7, µm zerkleinert und hierbei gleichzeitig · dispergiert werden. Füllstoff-Polyol-Dispersionen dieser Art werden beispielsweise in den DE-OS-2 850 609, 2 850 610 und 2 932 304 beschrieben.

Die anorganischen und organischen Füllstoffe werden der Reaktionsmischung vorteilhafterweise in Mengen von 0,5 bis 50 Gew.-%, vorzugsweise 1 bis 40 Gew.-%, bezogen auf das Gewicht der Polyisocyanat-Polyol-Mischung einverleibt.

Geeignete Flammschutzmittel sind beispielsweise Trikresylphosphat, Tris-2-chlorethylphosphat,Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivaten zum Flammfestmachen der Polyurethanschaumstoffe verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyol zu verwenden.

Nähere Angaben über die obengegenannten anderen üblichen Hilfs- und Zusatzstoffe sind der Fachliteratur,beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörper werden die organischen Polyisocyanate, Polyole, alkylsubstituierten Phenylendiamine und gegebenenfalls Kettenverlängerungsmittel, sek. aromatische Diamine und/oder 3,3',5,5'-tetra-alkylsubstituierte 4,4'-Diaminodiphenylmethane in solchen Mengen zur Umsetzung gebracht,daß das Verhältnis von NCO-Gruppen zu Zerewitinoff aktiven Wasserstoffatomen, gebunden an OH-, —$NH_2$ und —NHR-Gruppen 1 : 0,90 bis 1,25, vorzugsweise 1 : 0,95 bis 1,15 beträgt.

Die Herstellung der zelligen und vorzugsweise kompakten Polyurethan-Polyharnstoff-Formkörper erfolgt vorzugsweise im one shot-Verfahren nach der bekannten Reaktionsspritzguß-Technik. Diese Verfahrensweise wird beispielsweise beschrieben von Piechota und Röhr in « Integralschaumstoff », Carl-Hanser-Verlag, München, Wien 1975 ; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84. Die Formulierungen lassen sich jedoch auch zu Gießelastomeren und Integralschaumstoffen auf konventionelle Art verarbeiten.

Die erfindungsgemäß verwendbaren alkylsubstituierten Phenylendiamine werden in den Polyolen unter Rühren, gegebenenfalls bei erhöhten Temperaturen, beispielsweise zwischen 30 und 120 °C, gelöst. Nach einer vorteilhaften Ausführungsform werden die aufgeschmolzenen alkylsubstituierten Phenylendiamine den erwärmten Polyolen unter Rühren einverleibt.

Bei Verwendung einer Mischkammer mit mehreren Zulaufdüsen können die flüssigen Ausgangskomponenten oder Lösungen von festen in flüssigen Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Lösung aus alkylsubstituierten Phenylendiaminen und Polyolen mit den Katalysatoren und gegebenenfalls Kettenverlängerungsmitteln, sek. aromatischen Diaminen, tetraalkylsubstituierten Diamino-diphenylmethanen, Treibmitteln, Hilfsmitteln und Zusatzstoffen in der A-Komponente zu vereinigen und als B-Komponente die organischen Polyisocyanate zu verwenden. Vorteilhaft ist hierbei beispielsweise, daß die A- und B-Komponenten getrennt gelagert und raumsparend transportiert werden können und vor der Verarbeitung nur noch in den entsprechenden Mengen gemischt werden.

Die Menge des in die Form eingebrachten Reaktionsgemisches wird so bemessen, daß die erhaltenen kompakten Formkörper eine Dichte von 0,8 bis 1,4 g/cm$^3$, vorzugsweise von 0,9 bis 1,35 g/cm$^3$ und die zelligen Formkörper eine Dichte von 0,1 bis 0,8 g/cm$^3$, vorzugsweise von 0,15 bis 0,6 g/cm$^3$ aufweisen. DieAusgangskomponenten werden mit einer Temperatur von 15 bis 70 °C, vorzugsweise von 20 bis 55 °C in die Form eingebracht. Die Formtemperatur beträgt zweckmäßigerweise 20 bis 90 °C, vorzugsweise 40 bis 85 °C, gegebenenfalls kann es vorteilhaft sein übliche Formtrennmittel, beispielsweise auf Wachs- oder Silikonbasis, zur Verbesserung der Entformung, einzusetzen. Die Verdichtungsgrade bei der Herstellung von zelligen Formkörpern liegen üblicherweise zwischen 1 und 8, vorzugsweise zwischen 1,5 und 6.

Die nach dem erfindungsgemäßen Verfahren enhältlichen kompakten Polyurethan-Polyharnstoff-Formkörper eignen sich insbesondere zur Verwendung in der Automobilindustrie, beispielsweise als Stoßstangenabdeckungen und Karosserie-teile wie Kotflügel, Spoiler und Radkästenverbreiterungen sowie technische Gehäuseteile, Schuhsohlen und Laufrollen, die zelligen Schaumstoffe finden beispielsweise als Armlehnen, Kopfstützen, Sicherheitsabdeckungen im Automobilinnenraum sowie als Motorrad- und Fahrradsättel und Sitzkissen, Deckschichten in Verbundschaumstoffen Anwendung.

Die in den Beispielen genannten Teile beziehen sich auf das Gewicht.

### Beispiel 1

a) Zu 97,2 g 1,3-Dimethyl-5-tert.-butylbenzol — hergestellt nach J. Amer. Chem. Sce. 61, 101 (1939) — tropft man bei 0 bis 10 °C eine Mischung aus 89 g 98 %iger Salpetersäure und 120 g 90 %iger Schwefelsäure.Anschließend rührt man noch 3 Stunden bei 0 bis 10 °C und 12 Stunden bei Raumtemperatur. Nach Hydrolyse mit Eiswasser extrahiert man mit Toluol, wäscht die vereinigten organischen Phasen mit verdünnter Natronlauge und Wasser und entfernt das Lösungsmittel unter vermindertem Druck. Als Rückstand verbleiben 145 g eines langsam kristallisierenden Öls.

b) Bei Durchführung der Nitrierung in aliphatischen Kohlenwasserstoffen (z. B. Heptan) gemäß DE-AS-1 105 800 erhält man aus 16,2 g 1,3-Dimethyl-5-tert.-butylbenzol 22 g rohes Dinitrogemisch.

c) 50,4 g der rohen Dinitroverbindung werden in 200 ml Ethanol gelöst und mit 50 g Hydrazinhydrat versetzt. Man erwärmt auf 50 °C und fügt portionsweise Raney-Nickel in ethanolischer Suspension hinzu, bis die Gasentwicklung beendet ist. Man erhitzt noch 1 Std. zum Sieden, filtriert heiß den Katalysator ab und engt das Filtrat unter vermindertem Druck ein. Der verbleibende Rückstand kristalisiert beim Erkalten. Man erhält 35 g eines Dimethyl-tert.-butyl-phenylendiamingemisches vom Schmp. 73 bis 75 °C.

d) 600 g Dinitrodimethyl-tert.-butylbenzol werden in 2 l Ethanol mit 60 g Raney-Nickel als katalysator bei 100 °C und 100 bar Wasserstoffdruck hydriert. Man filtriert den Katalysator ab und destilliert das Filtrat unter vermindertem Druck. Man erhält 367 g eines Diaminodimethyl-tert.-butylbenzol-Gemisches ($Kp_{0,4}$ = 127 bis 131 °C), das beim Abkühlen langsam erstarrt.

### Beispiel 2

Die Darstellung von 2-Methyl-4,6-di-tert.-butyl-phenylendiamin-1,3 ist in Rec. Trav. Chim. Pays Bas *75*, 301 (1956) beschrieben.

### Beispiel 3

a) Die tert.-Butylierung von 1-Methyl-3-isopropylbenzol und die anschließende Nitrierung werden nach DRP 542 252 (Beispiel 1) durchgeführt.

b) Hydrierung des nach a) erhaltenen Gemisches isomerer Dinitromethylisopropyl-tert.-butylbenzole nach dem oben eschriebenen Verfahren (Beispiel 1d) liefert das entsprechende Methyisopropyl-tert.-butylphenylendiamin-1,3-Gemisch ($Kp_{0,5}$ = 115 bis 119 °C).

Beispiel 4

a) Zu einer Mischung von 106 g m-Xylol und 26 g Aluminiumchlorid tropft man langsam bei Raumtemperatur 96,5 g n-Octylbromid. Nach Abschwächung der Chlorwasserstoffentwicklung erwärmt man noch 1 Stunde auf 50 bis 60 °C und gießt nach Abkühlen auf Eis/Salzäure. Die organische Phase wird abgetrennt, mit Sodalösung neutral gewaschen und nach Trocknen über Natriumsulfat unter vermindertem Druck destilliert. Man erhält 80 g Dimethyloctylbenzol vom Siedepunkt 114 bis 120 °C (1,33 mbar).

b) Zu 65,4 g Dimethyloctylbenzol tropft man unter guter Kühlung (0 bis 10 °C) ein Gemisch aus 44,5 g 98 %iger Salpetersäure und 90 %iger Schwefelsäure. Man rührt anschließend 3 Stunden bei 0 bis 10 °C und 12 Stunden bei Raumtemperatur. Das Reaktionsgemisch gießt man in Eiswasser und nimmt die organische Phase mit Toluol auf. Der Toluolextrakt wird mit Wasser gewaschen, über $CaCl_2$ getrocknet und eingeengt. Der das rohe Dinitrodimethyloctylbenzol-Gemisch enthaltende Rückstand wird in 450 ml Ethanol gelöst und mit Raney-Nickel versetzt. Bei 50 °C tropft man langsam 75 ml Hydrazinhydrat zu, erhitzt noch 1 Stunde zum Sieden und filtriert den Katalysator aus der noch warmen Reaktionslösung ab. Das Filtrat wird unter vermindertem Druck destilliert. Man erhält 42,2 g eines bei 190 bis 200 °C (0,66 bis 0,8 mbar) siedenen Diamingemisches.

Beispiel 5

a) 1,3-Dimethyl-5-cyclohexylbenzol wird nach US-PS-2 955 929 dargestellt.

b) 18,8 g des nach a) erhaltenen Produkts werden bei Raumtemperatur langsam mit einer Mischung aus 14 g 98 %iger Salpetersäure und 34 g 95 %iger Schwefelsäure versetzt. Anschließend rührt man 20 Minuten bei Raumtemperatur und 15 Minuten bei 50 °C. Man gießt nach Abkühlen auf Eis, nimmt die organische Phase mit Methylenchlorid auf. Der Methylenchloridextrakt wird neutralgewaschen und getrocknet. Der nach Abdestillieren des Lösungsmittels verbleibende Rückstand wird analog Beispiel 1 mit Hydrazinhydrat/Raney-Nickel behandelt. Nach üblicher Aufarbeitung fällt das Dimethylcyclohexylphenylendiamin-1,3 in Form eines Öls an, das ohne weitere Reinigung zur Herstellung von Präpolymeren eingesetzt wird.

Beispiel 6

a) 1,3-Dimethyl-5-tert.-amylbenzol wird in Anlehnung an das in J. Amer. Chem. Soc. *61*, 1413 (1939) beschriebene Verfahren aus m-Xylol und 2-Methylbutanol-2 hergestellt. Die bei 105 bis 108 °C (18 Torr) siedende Fraktion wird für die weitere Umsetzung verwendet.

b) Zu 53,1 Gew.-Teilen des nach 6a) hergestellten Kohlenwasserstoffs tropft man bei 0 bis 10 °C eine Mischung aus 44,5 Gew.-Teilen 98 %iger Salpetersäure und 60 Gew.-Teilen 90 %iger Schwerfelsäure. Man rührt noch 3 Stunden bei 0 bis 10 oC und 12 Stunden bei Raumtemperatur nach. Anschließend gießt man auf Eis, nimmt mit Xylol auf, trennt die organische Phase ab und wäscht sie mit Wasser, verdünnter Natronlauge und Wasser. Nach Einengen unter vermindertem Druck erhält man 76 Gew.-Teile rohes Dinitro-1,3-dimethyl-5-tert.-amylbenzol.

c) Die nach 6b) erhaltene Dinitroverbindung wird in 450 Gew.-Teilen Ethanol gelöst und mit 5 Gew.-Teilen Raney-Nickel versetzt. Bei 50 °C beginnend tropft man langsam 75 Gew.-Teile Hydrazinhydrat zu, erhitzt noch eine Stunde zum Sieden, filtriert heiß und engt das Filtrat ein. Destillation des Rückstandes unter vermindertem Druck (ca. 0,4 mbar) liefert 28,4 Gew.-Teile eines bei 152-162 °C siedenden Diamino-1,3-dimethyl-5-tert.-amylbenzol-Gemisches.

Beispiele RIM-Materialien

Die im folgenden beschriebenen Systemformulierungen wurden, wenn nicht anders vermerkt, mit Hochdruckdosieranlagen, in denen die Vermischung nach Art einer Gegenstromverdüsung ertfolgt, nach dem RIM-Verfahren verarbeitet (Maschinen der Puromat- und Puromat SV-Reihe von Elastogran Maschinenbau/Straßlach bei München).

Für die mechanischen Prüfungen wurden Platten mit verschiedenen Abmessungen (300 × 300 bis 1 000 × 4 mm bzw. 600 × 400 × 4 mm) in temperierbaren, geschlossenen Plattenformen aus Stahl oder Aluminium hergestellt. Außerdem wurden Formteile wie Automobilkotflügel, Spoiler, Motorradkotflügel, Kotflügelverbreiterungsstreifen, Stoßfängerabdeckungen u.a. in Stahl-Aluminium- und Epoxidformen hergestellt. Die Befüllung der Formen erfolgt über Stangen-, Staubalken- oder Fächerängüsse mit gegebenenfalls integrierten Nachvermischungselementen. Die Schußgewichte variierten dabei von 350 bis ca. 5 000 g.

Für größere Formteile müssen die Dosieranlagen eine hohe Austragsleistung besitzen (ca. 2 kg/sec. bei einem Formteil von ca. 5 kg Gewicht). Trotz der hohen Reaktivität der flüssigen Systemkomponenten war es aber auch möglich, Schußzeiten von 0,4 bis 3,5 sec zu realisieren.

Kleinere Platten und Formteile (100 g Gewicht) konnten auch mit Niederdruckdosieranlagen (z.B. EMB F 6 und F 20 ST der obengenannten Firma) hergestellt werden, wobei die Befüllung in die offene Form erfolgte. Dabei empfiehlt es sich, kleine Mischkammern mit teflonbeschnichteten Oberflächen und ebensolchen Rührorganen zu verwenden.

Beispiel 7

75,8 Teile eines Blockcopolyetherols auf Basis Trimethylolpropan-Propylenoxid-Ethylenoxid mit einer OH-Zahl von 25,
23,0 Teile 2,4-Dimethyl-6-tert. butyl-phenylendiamin-1,3
1,0 Teile einer 33 %igen Lösung von Diazabicyclooctan in Dipropylenglykol und
0,20 Teile Dibutylzinndilaurat werden unter Erwärmen auf 50 °C zu einer Polyokomponente vermischt

und mit 54,5 Teilen (entsprechend einem Index von 1,05) eines Umsetzungsproduktes aus Dipropylenglykol und 4,4'-Diphenylmethandiisocyanat mit einem Isocyanatgehalt von 23 % nach dem RIM-Verfahren mit einer Hochdruckdosieranlage vom Typ Puromat 80 verarbeitet.

Die Temperatur der Systemkomponenten beträgt 50 °C, die Plattenform (500 × 300 × 4 mm) ist ebenfalls auf 50 °C temperiert. Die Formstandzeit beträgt 20 sec ; die Platten zeigen zu diesem Zeitpunkt beim Umbiegen um 180 °C keine Rißbildung. Die Dichte der Platten beträgt 1,05 bis 1,08 g/cm³. An den Testplatten wurden nach Temperung (1 Std./120 °C) die folgenden mechanischen Meßwerte ermittelt.

| | |
|---|---|
| Raumgewicht (g/cm³) | 1,10 |
| Reißfestigkeit (N/mm²) | 33,4 |
| Reißdehnung (%) | 260 |
| Weiterreißfestigkeit (N/mm) nach Graves | 120,5 |
| Shore D-Härte | 64 |
| Biege-E-Modul (N/mm²) bei 23 °C | 460 |
| Wärmeformbeständigkeit (°C) nach ISO-75/B | 136 |

Beispiel 8

72,8 Teile eines Blockcopolyetherols auf Basis Trimethylpropan-Propylenoxid-Ethylenoxid mit einer OH-Zahl von 25,
26,0 Teile 2,4-Dimethyl-6-cyclohexyl-phenylendiamin-1,3
1,0 Teile einer 33 %igen Lösung von Diazabicyclooctan in Dipropylenglykol und
0,20 Teile Dibutylzinndilaurat werden unter Erwärmen auf 50 °C zu einer Polyolkomponente vermischt

und mit 54,5 Teilen (entsprechend einem Index von 1,05) des in Beispiel 7 verwendeten Isocyanatpräpolymeren unter den dort beschriebenen Bedingungen zu Testplatten verarbeitet.

Eigenschaften :

| | |
|---|---|
| Raumgewicht (g/cm³) | 1,08 |
| Reißfestigkeit (N/mm²) | 29,4 |
| Reißdehnung (%) | 310 |
| Weiterreißfestigkeit (N/mm) nach Graves | 103,5 |
| Shore D-Härte | 60 |
| Biege-E-Modul (N/mm²) bei 23 °C | 390 |
| Wärmeformbeständigkeit (°C) n. ISO-75/B | 121° |

Beispiel 9

69,1 Teile eines Blockcopolyetherols auf Basis Trimethylolpropan-Propylenoxid-Ethylenoxid mit einer OH-Zahl von 25,
29,7 Teile 2,4-Dimethyl-6-n-octyl-phenylendiamin-1,3

1,0 Teile einer 33 %igen Lösung von Diazabicyclooctan in Dipropylenglykol und
0,20 Teile Dibutylzinndilaurat werden unter Erwärmen zu einer Polyolkomponente vermischt

und mit 43,2 Teilen (entsprechend einem Index von 1,05) eines Umsetzungsproduktes von Diphenylmethandiisocyanat und Polyphenyl-Polymethylen-polyisocyanaten (Roh-MDI) mit Propylenglykol und Oligopropylenglykolen (NCO-Gehalt : 28,6 %) unter den in Beispiel 7 angegebenen Bedingungen zu Testplatten verarbeitet.

| Eigenschaften : | |
|---|---|
| Raumgewicht (g/cm$^3$) | 1,05 |
| Reißfestigkeit (N/mm$^2$) | 23,4 |
| Reißdehnung (%) | 205 |
| Weiterreißfestigkeit (N/mm) nach Graves | 75,4 |
| Shore D-Härte | 61 |

**Patentansprüche**

1. Verfahren zur Herstellung von gegebenenfalls zelligen Polyurethan-Polyharnstoff-Formkörpern durch Umsetzung von organischen Polyisocyanaten, Polyolen und alkylsubstituierten Phenylendiaminen oder Mischungen aus alkylsubstituierten Phenylendiaminen und Kettenverlängerungsmitteln, sek. aromatischen Diaminen und/oder 3,3', 5,5'-tetra-alkylsubstituierten 4,4'-Diaminodiphenylmethanen in Gegenwart von katalysatoren sowie gegebenfalls Treibmitteln, Hilfs- und Zusatzstoffen, dadurch gekennzeichnet, daß man als alkylsubstituierte Phenylendiamine Verbindungen der Formeln

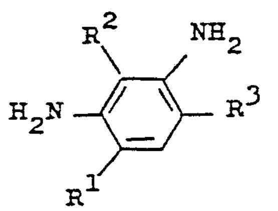 (I) 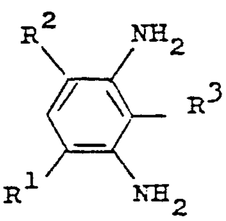 (II) und/oder 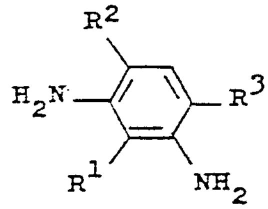 (III)

verwendet, in denen $R^1$ und $R^2$ gleich oder verschieden sind und einen Alkylrest mit 1 bis 4 C-Atomen, die linear oder verzweigt angeordnet sind, bedeuten und $R^3$ ein Alkylrest mit 4 bis 12 Kohlenstoffatomen oder ein fünf- oder sechsgliedriger Cycloalkylrest ist, wobei diese Phenylendiamine oder deren Gemische in Mengen von 5-150 Gew. Teilen, berogen auf 100 Gew. Teile Polyol, zum Einsatz gelangen.

2. Verfahren nach Anspruch 1, dadurch gekennzeichnet, daß der Alkylrest $R^3$ ein tert. Butylrest ist.

3. Verfahren nach Anspruch 1, dadurch gekennzeichnet, daß der Alkylrest $R^3$ ein linearer oder verzweigter Octylrest ist.

4. Verfahren nach Anspruch 1, dadurch gekennzeichnet, daß der Alkylrest $R^3$ ein Cyclohexylrest ist.

5. Verfahren nach Anspruch 1, dadurch gekennzeichnet, daß die Alkylreste $R^1$ und $R^2$ Methyl- und $R^3$ tert.-Butylgruppen sind.

6. Verfahren nach Anspruch 1, dadurch gekennzeichnet, daß $R^1$ und $R^2$ eine Methyl- und $R^3$ eine lineare oder verzweigte Octylgruppe sind.

7. Verfahren nach Anspruch 1, dadurch gekennzeichnet, daß $R^1$ und $R^2$ eine Methyl- und $R^3$ eine Cyclohexylgruppe sind.

8. Verfahren nach Anspruch 1, dadurch gekennzeichnet, daß die alkylsubstituierten Phenylendiamine in Mischungen mit Kettenverlängerungsmitteln, sek. aromatischen Diaminen und/oder 3,3',5,5'-tetraalkylsubstituierten 4,4'-Diamino-diphenylmethanen verwendet werden.

9. Verfahren nach den Ansprüchen 1 bis 8, dadurch gekennzeichnet, daß die Komponenten nach der Reaktionsspritzgußtechnik verarbeitet werden.

10. Alkylsubstituierte Phenylendiamine der Formeln (I), (II) und/oder (III), in denen $R^1$ und $R^2$ je eine Methylgruppe und $R^3$ einen tert.-Butylrest, einen tert.-Amylrest, einen Hexylrest oder einen Octylrest bedeuten.

**Claims**

1. A process for the preparation of cellular or non-cellular polyurethane-polyurea moldings by reacting organic polyisocyanates, polyols and alkyl-substituted phenylenediamines and chain extenders, secondary aromatic diamines and/or 3,3',5,5'-tetra-alkyl-substituted 4,4'-diaminodiphenylmethanes in

the presence or absence of blowing agents, auxiliaries and additives, wherein there are used as alkyl-substituted phenylenediamines compounds of the formulae

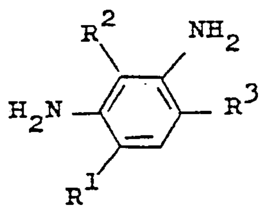 (I) 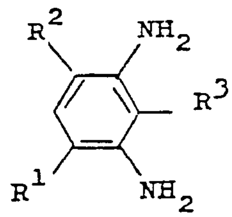 and/or (II) 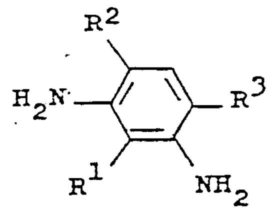 (III)

where $R^1$ and $R^2$ are identical or different and each denotes an alkyl radical of 1 to 4 carbon atoms which are arranged linearly or branched, and $R^3$ is an alkyl radical of 4 to 12 carbon atoms or a five- or six-membered cycloalkyl radical, these phenylenediamines or their mixtures being used in an amount of from 5 to 150 parts by weight per 100 parts by weight of polyol.

2. A process as claimed in claim 1, wherein the alkyl radical $R^3$ is a tert-butyl radical.

3. A process as claimed in claim 1, wherein the alkyl radical $R^3$ is a linear or branched octyl radical.

4. A process as claimed in claim 1, wherein the alkyl radical $R^3$ is a cyclohexyl radical.

5. A process as claimed in claim 1, wherein the alkyl radicals $R^1$ and $R^2$ are each a methyl group, and $R^3$ is a tert-butyl group.

6. A process as claimed in claim 1, wherein $R^1$ and $R^2$ are each a methyl group and $R^3$ is a linear or branched octyl group.

7. A process as claimed in claim 1, wherein $R^1$ and $R^2$ are each a methyl group and $R^3$ is a cyclohexyl group.

8. A process as claimed in claim 1, wherein the alkyl-substituted phenylenediamines are used in admixture with chain extenders, secondary aromatic diamines and/or 3,3',5,5'-tetra-alkyl-substituted 4,4'-diaminodiphenylmethanes.

9. A process as claimed in claims 1 to 8, wherein the components are processed using reaction injection molding technology.

10. Alkyl-substituted phenylenediamines of the formulae (I), (II) and/or (III) where $R^1$ and $R^2$ are each a methyl group and $R^3$ is a tert-butyl radical, a tert-amyl radical, a hexyl radical or an octyl radical.

## Revendications

1. Procédé de préparation de corps moulés en polyuréthane-polyurée, éventuellement cellulaires, par réaction de polyisocyanates organiques, polyols et phénylèndiamines substituées par alkyle ou de mélanges de phénylèndiamines substitués par alkyle et d'allongeurs de chaînes, diamines sec. aromatiques et/ou 4,4'-diaminodiphénylméthanes tétrasubstituées par alkyle en 3,3',5,5', en présence de catalyseurs ainsi qu'éventuellement de gonflants, auxiliaires et additifs, caractérisé par le fait que l'on utilise, comme phénylèndiamines, des composés de formules :

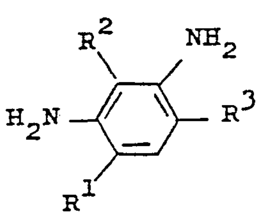 (I) 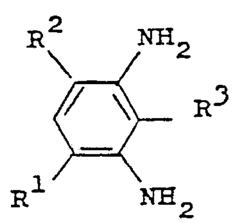 et/ou (II) 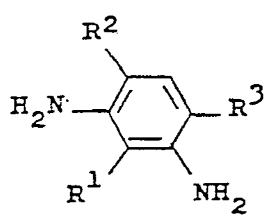 (III)

dans lesquelles $R^1$ et $R^2$ sont identiques ou différents et représentent un reste alkyle de 1 à 4 atomes C, disposés de façon linéaire ou ramifiée, et $R^3$ est un reste alkyle de 4 à 12 atomes de carbone ou un reste cycloalkyle à cinq ou six chaînons, ces phénylèndiamines ou leurs mélanges étant introduits en proportion de 5 à 150 parties en poids, par rapport à 100 parties en poids de polyol.

2. Procédé selon la revendication 1, caractérisé par le fait que le reste alkyle $R^3$ est un reste butyle tert.

3. Procédé selon la revendication 1, caractérisé par le fait que le reste alkyle $R^3$ est un reste octyle linéaire ou ramifié.

4. Procédé selon la revendication 1, caractérisé par le fait que le reste alkyle $R^3$ est un reste cyclohexyle.

5. Procédé selon la revendication 1, caractérisé par le fait que les restes alkyle $R^1$ et $R^2$ sont des groupes méthyle et $R^3$ un groupe tert-butyle.

6. Procédé selon la revendication 1, caractérisé par le fait que $R^1$ et $R^2$ sont des groupes méthyle et $R^3$ un groupe octyle linéaire ou ramifié.

7. Procédé selon la revendication 1, caractérisé par le fait que $R^1$ et $R^2$ sont des groupes méthyle et $R^3$ un groupe cyclohexyle.

8. Procédé selon la revendication 1, caractérisé par le fait que les phénylèndiamines substituées par alkyle sont utilisées en mélange avec des moyens allongeurs de chaîne, des diamines aromatiques secondaires et/ou des 4,4-diamino-diphénylméthanes tétrasubstituées par alkyle en 3,3'-5,5'.

9. Procédé selon les revendications 1 à 8, caractérisé par le fait que les composants sont traités selon la technique de moulage par injection-réaction.

10. Phényldiamines substituées par alkyle de formules (I), (II) et/ou (III), dans lesquelles $R^1$ et $R^2$ représentent chacun un groupe méthyle et $R^3$ un reste tert-butyle, un reste tert-amyle, un reste hexyle ou un reste octyle.